# EUROPÄISCHE PATENTSCHRIFT

(11) **EP 4 145 080 B1**
(45) Veröffentlichungstag und Bekanntmachung des Hinweises auf die Patenterteilung: **08.05.2024**
(21) Anmeldenummer: 22000209.1
(22) Anmeldetag: 02.09.2022
(51) Int. Cl.: F28D 1/02, F28D 1/06, B05B 7/16, B05C 1/00, B05C 11/10, B05D 7/00, B65D 88/74, B65D 90/02, C09D 191/06

(54) **SYSTEM MIT ARBEITSBEHÄLTER FÜR DIE BEREITSTELLUNG VON FLÜSSIGEN ARBEITSMEDIEN ZUR BEARBEITUNG VON TEILEN**
SYSTEM COMPRISING A WORK CONTAINER FOR PROVIDING LIQUID WORK MEDIA FOR PROCESSING PARTS
SYSTÈME COMPRENANT UN RÉCIPIENT DE TRAVAIL POUR LA PRÉPARATION DE FLUIDES DE TRAVAIL POUR LE TRAITEMENT DE PIÈCES

(30) Priorität: 02.09.2021 DE 102021004461; 10.09.2021 DE 102021004576
(43) Veröffentlichungstag der Anmeldung: 08.03.2023
(73) Patentinhaber: ATUS Automatisierungstechnik GmbH, 08393 Meerane (DE)
(72) Erfinder: Dörffel, Thomas, 08064 Zwickau (DE); Friedenberger, Andrè, 08427 Fraureuth (DE)
(74) Vertreter: Auerbach, Bettina

(56) Entgegenhaltungen:
- DE-A1- 1 910 824
- DE-A1- 10 164 209
- DE-A1- 19 607 586
- US-A- 6 028 882

## Beschreibung

Die Erfindung betrifft einen geschlossenes System für die Bereitstellung von flüssigen heißen Arbeitsmedien zur Bearbeitung von Teilen, bestehend aus einem geschlossenen Behälter bei dem sowohl die Behälterwandung als auch der Behälterboden doppelwandig ausgebildet sind und in den Zwischenbereichen des Behälterbodens als auch der Behälterwandung ein mit einem Heizmedium betriebenes Heizsystem angeordnet ist.

Die Erfindung findet überwiegend Anwendung im Karosseriebau der Automobilbauindustrie und dient der Realisierung einer Komplett- oder Teildurchflutung der Hohlräume der Automobilkarosserie oder von Teilen der Karosserie. Sie kann auch im Maschinen- oder Schiffsbau zur Durchflutung der Hohlräume von Baugruppen eingesetzt werden.

Das System für die Bereitstellung von heißen Arbeitsmedien, wie Heißwachs, sind aus dem Stand der Technik bereits bekannt. So gibt es eine bekannte Lösung, bei der Heizrohre durch den Innenraum des Behälters und somit durch das Heißwachs geführt werden und somit mit diesen Heizrohren im direkten Kontakt stehen und die gewünschte effiziente Wärmeübertragung erfolgt. Eine sehr effiziente Lösung, da die Rohre umfänglich von dem Heißwachs umschlossen werden. Diese Lösung bietet jedoch die Gefahr einer Wachsexplosion, falls eines der Heizrohre eine Leckage aufweist und das Wachs mit dem Heizwasser in direkten Kontakt gerät.

Eine weitere Lösung weist eine Doppelwandung des Behälters auf. Im Innenbereich der Doppelwandung ist ein Rohrsystem angeordnet, welches das Heizmedium führt und so auf den Behälterinhalt erwärmend wirken soll. Auf Grund dessen, dass die Rohre mit nur einer sehr kleinen Kontaktfläche mit der Außenwand des Behälters in Kontakt stehen, ist die Möglichkeit der Wärmeübertragung der aufgeheizten Rohre zum Behälterinhalt sehr uneffektiv.

In der DE 196 07 586 A1 wird sowohl ein Verfahren als auch eine Anlage zum Konservieren der Hohlräume von Werkstücken beschrieben, wird bei der Beschreibung der Anlage von einem baulich geschlossenen, temperierten Abschnitt mit räumlich voneinander getrennten Aufheizbereich gesprochen. Dieser Aufheizbereich dient dem Aufheizen der zu konservierenden Karosse, wobei das aufgeheizte Konservierungsmittel mittels flexibler Leitungen an die Karosse aufgeheizt herangeführt (gepumpt) wird. Dabei sind flexible Leitungen beheizbar ausgebildet und werden mit an Stützen gehalterter Koppelstücke (16) lösbar angeordnet. Bei dieser Lösung der Konservierung von Karossen ist sehr zeitaufwendig, da jede einzelne Konservierungsstelle angesteuert und dann mit dem Konservierungsstoff beaufschlagt werden muss. Auch diese Lösung bietet keinen effektiven zeitsparenden Weg, um Werkstückteile mit einem heißen Arbeitsmedium zu beaufschlagen.

Der Erfindung liegt deshalb die Aufgabe zugrunde, die Nachteile des Standes der Technik zu überwinden und eine technische Lösung zu schaffen, mit deren Hilfe eine gleichmäßige und effiziente Aufheizung eines mit einem Arbeitsmedium, wie beispielsweise Wachs, gefüllten Behälters zur Bereitstellung von einem heißen Arbeitsmedium, für die Bearbeitung von Maschinenteilen, wie bei der Hohlraumkonservierung von Bauteilen des Maschinenbaus, des Automobilbaus und des Flugzeugbaus sichergestellt werden kann. Dabei soll beim heißen Arbeitsmedium eine gleichmäßiger Temperaturbereich garantiert aufrecht erhalten werden um eine gleichmäßige Viskosität des Arbeitsmediums, wie beispielsweise des Wachses, zu erreichen, um somit eine hohe Qualität der Konservierung gewährleiten zu können. Es soll weiterhin sicher vermieden werden, dass das heiße Arbeitsmedium mit dem Heizmedium bei einer Leckage in Kontakt gerät, um eine damit verbundene Verunreinigung oder sogar Explosionsgefahr sicher zu vermeiden.

Erfindungsgemäß wird die Aufgabe durch die Merkmale des Patentanspruchs 1 gelöst. Die vorteilhaften Ausgestaltungen der Lösung sind in den Unteransprüchen beschrieben.

Danach betrifft die Erfindung ein System für die Bereitstellung eines flüssigen heißen Arbeitsmediums zur Bearbeitung von Teilen, bestehend aus einem geschlossenen Behälter, bei dem sowohl die Behälterwandung als auch der Behälterboden doppelwandig ausgebildet sind und in den Zwischenbereichen des Behälterbodens als auch der Behälterwandung ein mit einem Heizmedium betriebenes Heizsystem angeordnet ist. Die Entnahmepumpen für das Arbeitsmedium sind von Oben über die Behälterdecke zum Behälterinnenraum zugänglich angeordnet. Zusätzlich verfügt der Arbeitsbehälter über ein Füllstandmesssystem für das Arbeitsmedium zur sicheren Bereitstellung der Arbeitsmedium-Reserven. Ebenso verfügt der Arbeitsbehälter über wenigstens eine Zuführungseinrichtung für das Arbeitsmedium und wenigstens eine Absaugpumpe für das Arbeitsmedium zur Entnahme des Arbeitsmediums mit der gewünschten Temperatur für den Transport und die Bereitstellung des heißen Arbeitsmediums für die Bearbeitung von Teilen, wie das Tränken, Besprühen oder Fluten von Maschinenteilen, beispielsweise zur Konservierung dieser Teile.

Außerhalb des Behälters angeordnet ist eine Heizung für das ständige Heizen des Heizmediums, wodurch das Heizmedium immer auf eine vorbestimmte Temperatur wieder aufgeheizt und mit dieser Temperatur dem Behälterdoppelboden und der Behälterdoppelwand als Heizmedium für das im Arbeitsbehälter befindliche aufzuheizende Arbeitsmedium zugeführt wird.

Erfindungsgemäß ist zur Ausbildung einer flächendeckend gleichmäßig arbeitenden Bodenheizung an der gesamten Fläche des Bodens des Arbeitsbehälters eine Heizmedienwanne als geschlossene Wanne angeordnet. Im Inneren der Wanne sind C-förmige Führungs- und Versteifungsbleche für die Führung des Heizmediums angeordnet. Die C-förmigen Führungs- und Versteifungsbleche sind so mit deren seitlichen Schenkeln fest an der Außenseite des Arbeitsbehälterbodens angeordnet, dass diese Führungskanäle für das Heizmedium bilden, welches außerhalb des Arbeitsbehälters mittels einer separaten Heizanlage aufgeheizt wird. Dazu sind an den Führungskanälen an dem einen Ende jeweils ein Heizmedienvorlauf und an dem anderen Ende ein Heizmedienrücklauf angeordnet, welche mit der Heizanlage jeweils in Verbindung stehen und das aufzuheizende Heizmedium der Heizanlage zuzuführen und on der Heizanlage das aufgeheizte Heizmedium den Heizmedienkreisläufen der Seitenwand und es Bodens zuzuführen. Mit der Kanalausbildung für den Transport des Heizmediums wird sichergestellt, dass die Wärmeübertragung durch das Heizmedium schnell, direkt und bedarfsgerecht an die Außenwand des Arbeitsbehälters realisiert wird und somit ein direkter und fasst flächendeckender Wärmeübergang effektiv vom Heizmedium an die Außenwand des Arbeitsbehälters und von dort direkt auf das Arbeitsmedium erfolgt. Die geringfügen Kontaktstellen der Führungs- und Versteifungsbleche und Abstandsbleche können dabei vernachlässigt werden, da diese weniger als 1% der Arbeitsbehälter-Bodenfläche ausmachen.

Des Weiteren sieht eine vorteilhafte Ausgestaltung der Erfindung vor, dass zwischen den Führungs- und Versteifungsblechen zwischen der Arbeitsbehälteraußenwand im Bodenbereich und im Seitenwandbereich und der Innenwandfläche der den Arbeitsbehälter umschließenden Heizmedienwanne der Statik dienende Versteifungsbleche so fest angeordnet und ausgebildet sind, dass diese den Heizmedienfluss innerhalb der Heizmedienwanne des Behälterbodens und der Seitenbereiche nicht behindern.

Zum möglichen Bedarf des Ablaufes des Arbeitsmediums ist es vorgesehen, dass der Behälterboden eine von 0° abweichende, vorteilhafter Weise mindestens 0,5° Neigung zur Horizontalen aufweist und über einen Behälterbodenablauf am Randbereich der kleinsten Abweichung zur Horizontalen aufweist. Dadurch ist die Möglichkeit gegeben, dass bei Wartungsarbeiten das Arbeitsmedium einfach und unkompliziert abgelassen werden kann. Die der Statik dienende zusätzlichen Abstandsbleche sind dabei dieser von der Horizontalen abweichenden jeweiligen Abmessung zwischen Arbeitsbehälteraußenwand im Bodenbereich und innerer Bodenbereich der Heizmedienwanne in ihren Abmessungen anzupassen.

Zur Ausbildung einer Wandheizung an den äußeren Seitenwandbereichen des Arbeitsbehälters ist ebenfalls eine umlaufend ausgebildete und den Arbeitsbehälter umschließende Heizmedienwanne angeordnet. Innerhalb dieser Heizmedienwanne sind an der Arbeitsbehälteraußenwand umlaufend und im Abstand zueinander Heizmedienführungskanäle angeordnet. Diese Führungskanäle werden ebenfalls durch C-förmige Führungsbleche, welche auch mit deren stumpfen Enden der beiden seitlichen Schenkel des jeweiligen C-Profilbleches an der äußeren Behälterwand des Arbeitsbehälters angeordnet sind, umlaufend ausgebildet. Zusammen mit der zwischen den stumpfen Enden der C-Profilbleche befindlichen äußeren Wand des Arbeitsbehälters wird wenigstens einer um die seitliche äußere Arbeitsbehälterwandung umlaufender, das Heizmedium führender Heizmedium-Führungskanal und somit wenigstens ein Heizmedienkreislauf im Seitenwandbereich gebildet. Vorteilhafter Weise werden mehrere Führungskanäle und somit mehrere Heizkreisläufe im Seitenwandbereich und im Bodenbereich in den Heizmedienwannen angeordnet, um eine effektive, bedarfsgerechte Wärmeübertragung auf das Arbeitsmedium zu gewährleiten und sicher zu stellen.

Jeder Heizmedium-Führungskanal verfügt über einen Zu- und einen Ablauf für das Heizmedium, welche mit der außerhalb des Behälters angeordneten Heizung in direkter Verbindung stehen.

Für die Entnahme des im Arbeitsbehälter bereitgestellten und ständig auf die gewünschte Temperatur geheizten Arbeitsmediums sind an der oberen Behälterabdeckung mittels eines Stegsystems Arbeitsmedium-Absaugpumpen angeordnet und befestigt. Diese sind mit einem Pumpleitungssystem für das Arbeitsmedium mit den Abgängen am Arbeitsbehälter verbunden. Das Pumpleitsystem ist dabei so angeordnet, dass die einzelnen Rohre des Pumpleitsystems von der jeweiligen Pumpe in das heiße Reservoir des Arbeitsmediums bis kurz vor dem Behälterboden eintaucht und einen Abgang zur Behälteraußenwand aufweist, um das Arbeitsmedium zur Bearbeitungsstelle für die Karosserieteile oder Maschinenteile weiter zu transportieren.

Es hat sich als vorteilhaft herausgestellt, wenn das Pumpleitungssystem aus flexiblen Schläuchen ausgebildet ist, welche auch mit einem Übermaß an Schlauchlänge ausgestattet sind, so dass für Reparatur- und Wartungszwecke die jeweilige Pumpe mit verbundener Schlauchleitung aus dem Behälter herausgehoben werden kann, ohne dass das Pumpleitungssystem den Arbeitsbehälter verlassen muss.

Dabei verfügt jede Arbeitsmedien-Absaugpumpe über eine separate Ansteuerung, so dass jede Pumpe bzw. jeder Arbeitsmedienabgang separat in Druck und Volumen auf die jeweiligen Anforderungen gestaltbar ist.

Sowohl an der Heizmedienwanne am Arbeitsbehälterboden als auch an der Heizmedienwanne im Seitenbereich des Arbeitsbehälters sind an der äußeren Wannenwandung jeweils eine Dämmschicht zur Minimierung von Wärmeverlusten beim Heizmedium angeordnet.

Die Vorteile der Lösung bestehen zusammengefasst in der Realisierung einer gleichmäßigen und sehr effizienten Wärmeübertragung vom Heizmedium auf das Arbeitsmedium, wie beispielsweise Wachs zur Bereitstellung von Heißwachs mit gleichbleibendem Temperaturniveau zur qualitativ hochwertigen Bearbeitung von Teilen, beispielsweise der Konservierung von Hohlräumen. Durch den geschaffenen großflächigen Kontakt des Heizmediums an den Arbeitsbehälteraußenwandungen und der minimal ausgebildeten Kontaktflächen der Führungsbleche ist der Wärmeübergang optimal und energieeffizient gestaltet. Dadurch wird vor allem die gleichmäßige und fortlaufende Erwärmung und das stabile Halten des Temperaturniveau des Arbeitsmediums im Arbeitsbehälter realisiert. Es wird eine gleichbleibende Viskosität des gesamten Arbeitsmediums sichergestellt und erreicht.

Ein weiterer Vorteil der vorgeschlagenen technischen Lösung besteht darin, dass die Gefahr eines Kontaktes zwischen Heizmedium und Arbeitsmedium ausgeschlossen ist und so eine Verunreinigung des Arbeitsmediums durch eine eventuell auftretende Leckage in der Leitung des Heizmediums oder eine Explosionsgefahr durch einen solchen Kontakt sicher vermieden.

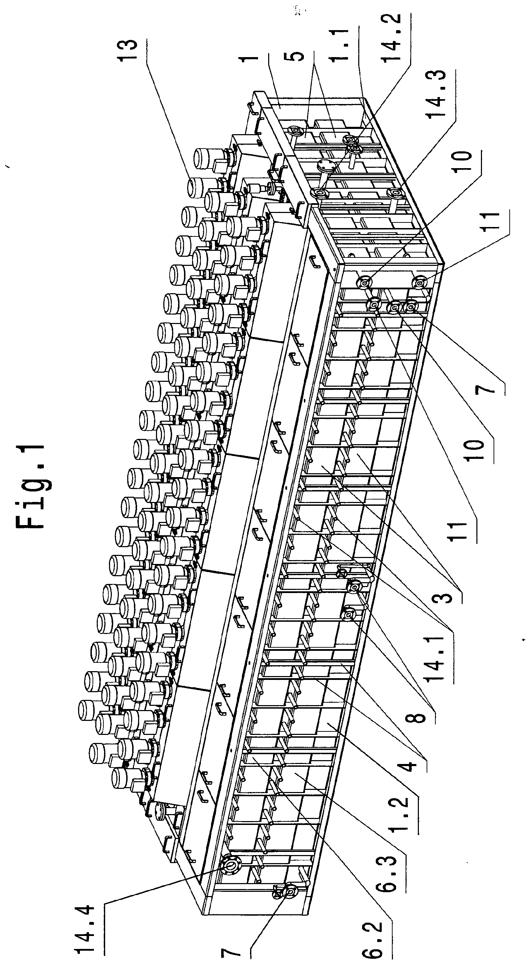

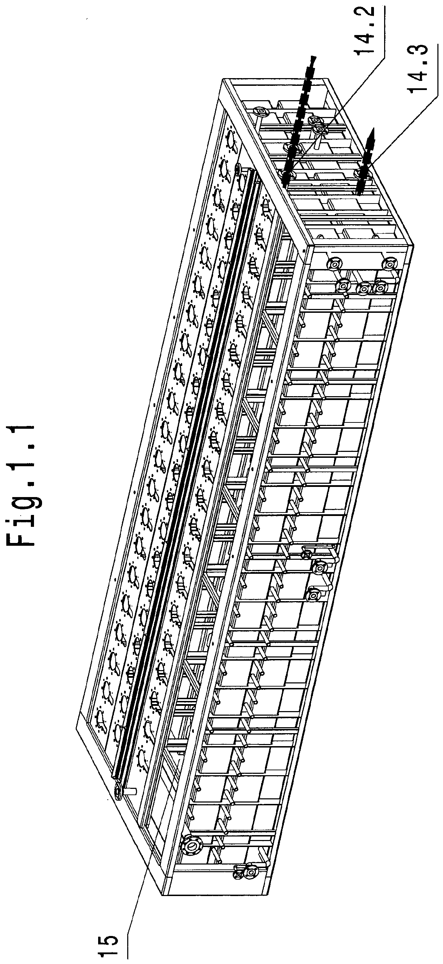

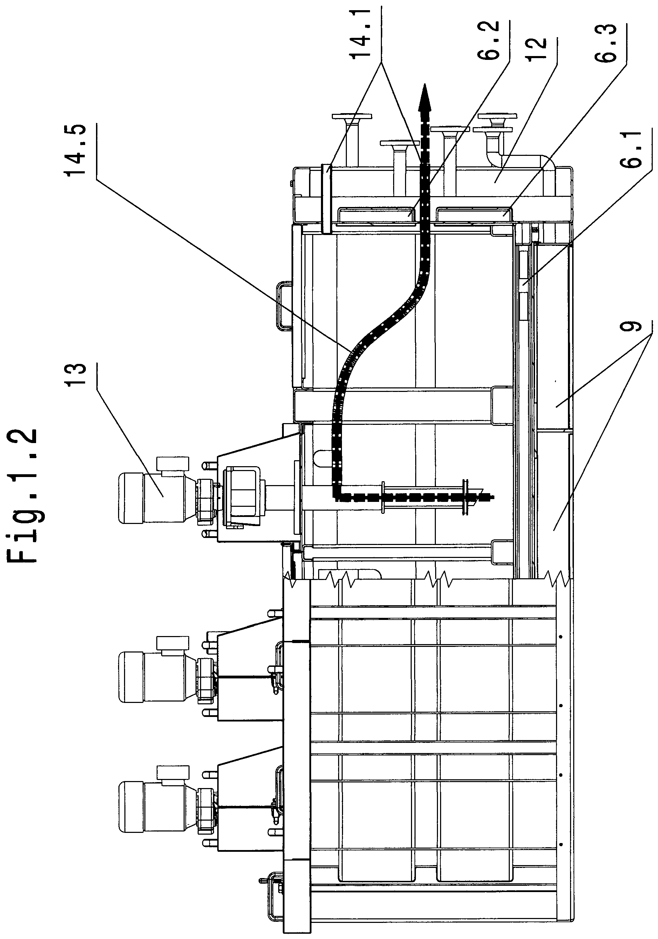

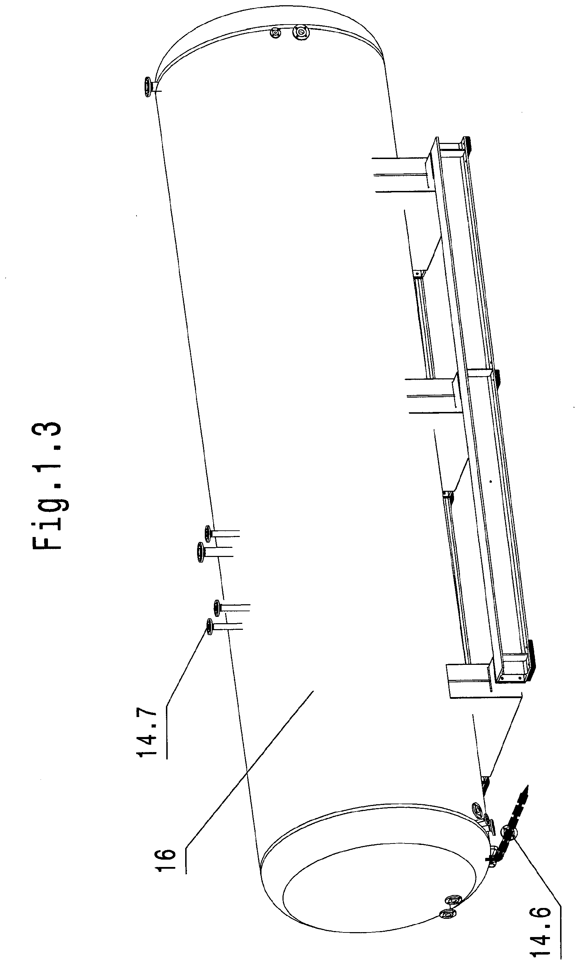

In den beigefügten Zeichnungen zeigen die
- Fig.1: Perspektivische Ansicht des kompletten Arbeitsbehälters 1 mit der Medienwanne 3 im Seitenwandbereich
- Fig.1.1: Perspektivische Ansicht des Arbeitsbehälters 1 ohne Anbauteile mit der Medienwanne 3 im Seitenwandbereich
- Fig.1.2: Pumpleitungssystem 14 zwischen Arbeitsmedien-Absaugpumpe 13 und Abnahmestelle für das Arbeitsmedium 14.1 (Abgang Arbeitsmedienpumpe)
- Fig.1.3: Perspektivische Ansicht des Arbeitsmedium-Lagertanks 16

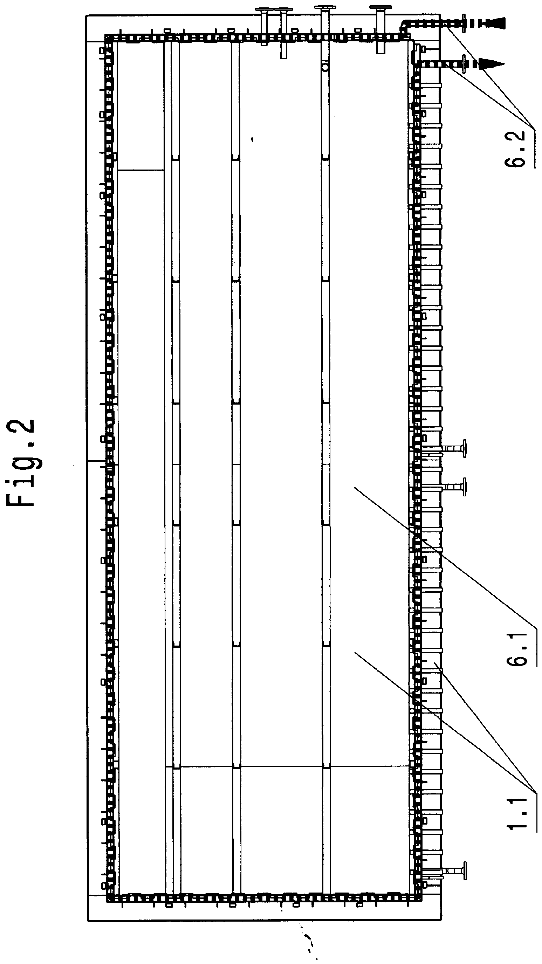

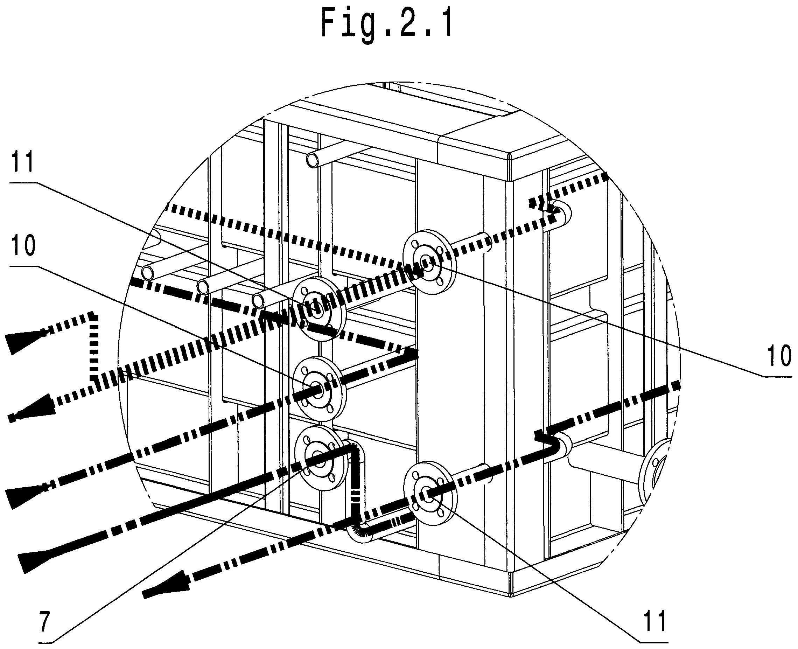

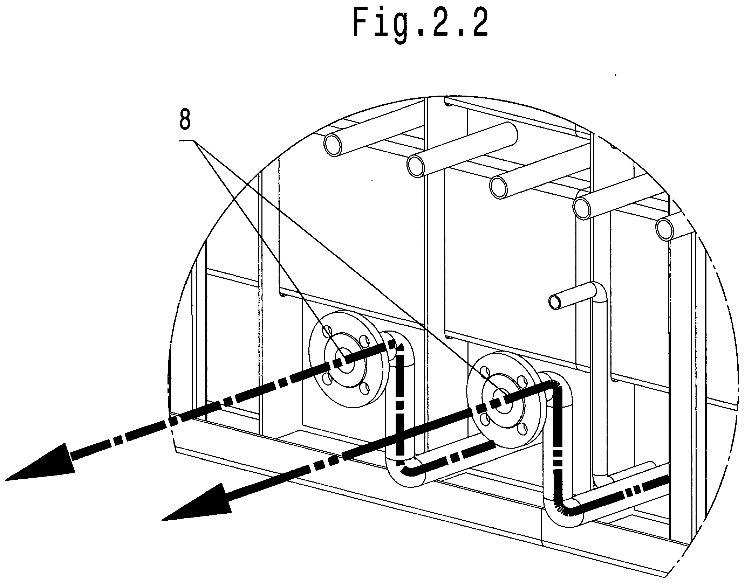

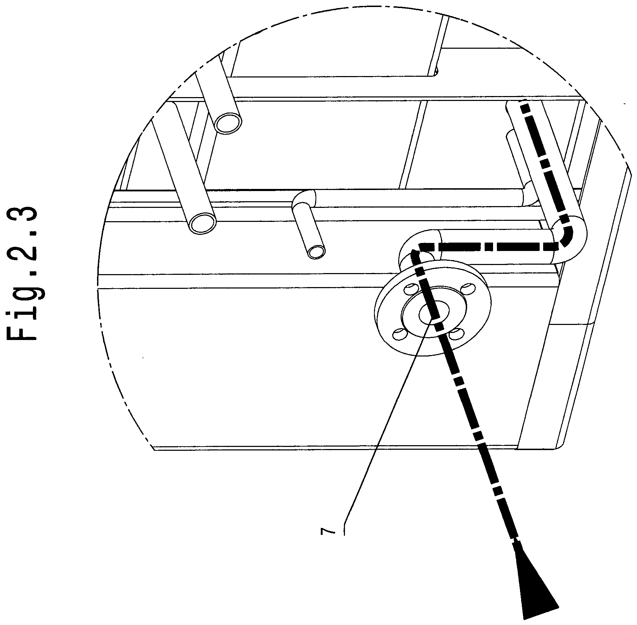

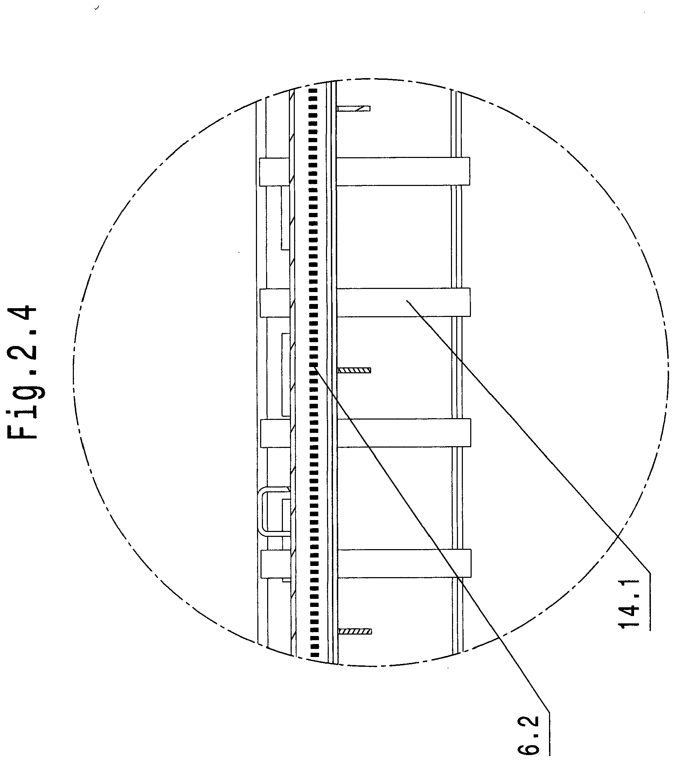

- Fig.2: schematische Draufsicht auf den Arbeitsbehälter 1 mit Heizmedienkreislauf Boden 6.1 und Heizmedienkreislauf Wand (Oberer Heizmedienkreislauf Seitenwand 6.2, Unterer Heizmedienkreislauf Seitenwand 6.3)
- Fig.2.1: Detail 1 der Anschlüsse der Heizmedienkreisläufe
- Fig.2.2: Detail 2 der Anschlüsse der Heizmedienkreisläufe
- Fig.2.3: Detail 3 der Anschlüsse der Heizmedienkreisläufe
- Fig.3: schematische Draufsicht auf den Arbeitsbehälterboden 1.1 mit Heizmedienkreislauf 6.1
- Fig.3.1: Detail 1 schematische Draufsicht auf den Arbeitsbehälterboden 1.1 mit Heizmedienkreislauf Boden 6.1
- Fig.3.2: Detail 2 schematische Draufsicht auf den Arbeitsbehälterboden 1.1 mit Heizmedienkreislauf Boden 6.1

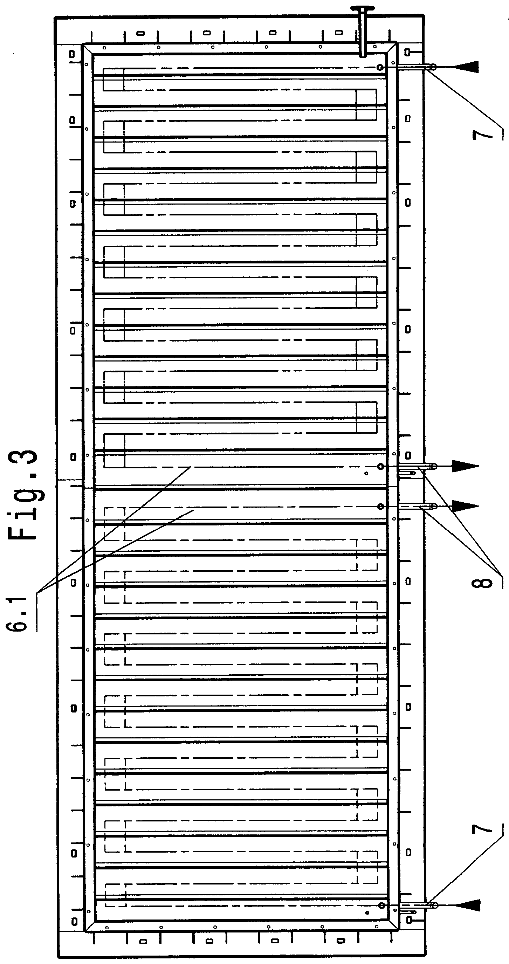

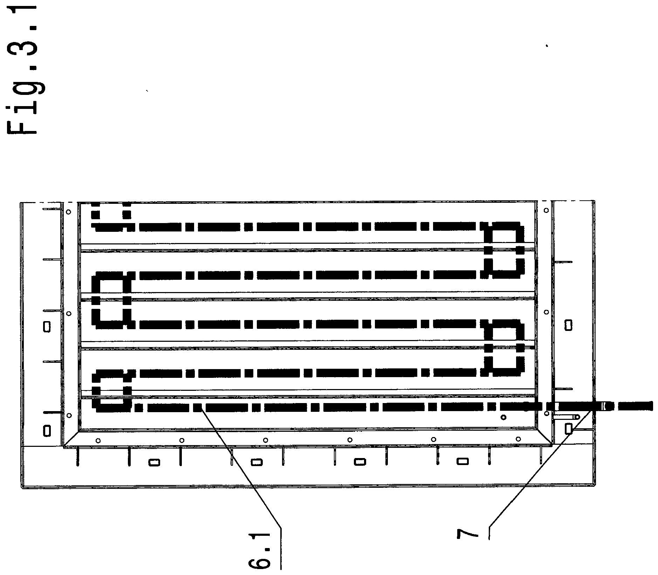

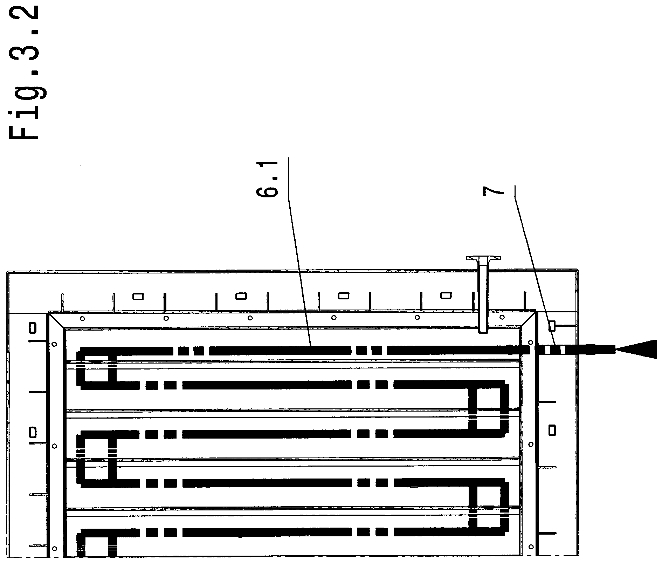

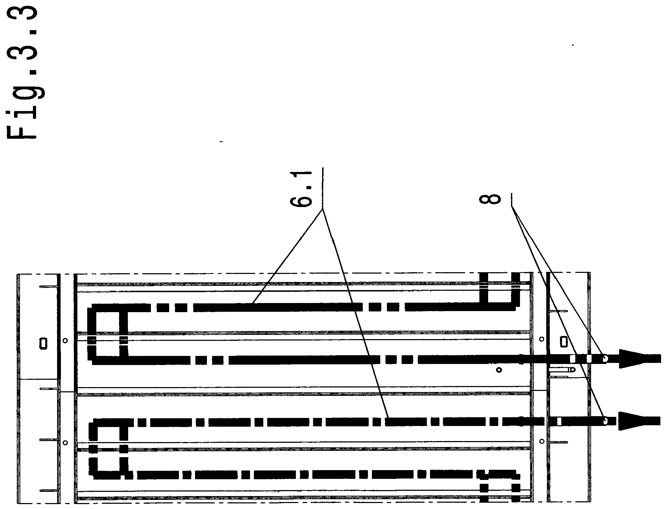

- Fig.3.2: Detail 3 schematische Draufsicht auf den Arbeitsbehälterboden 1.1 mit Heizmedienkreislauf Boden 6.1

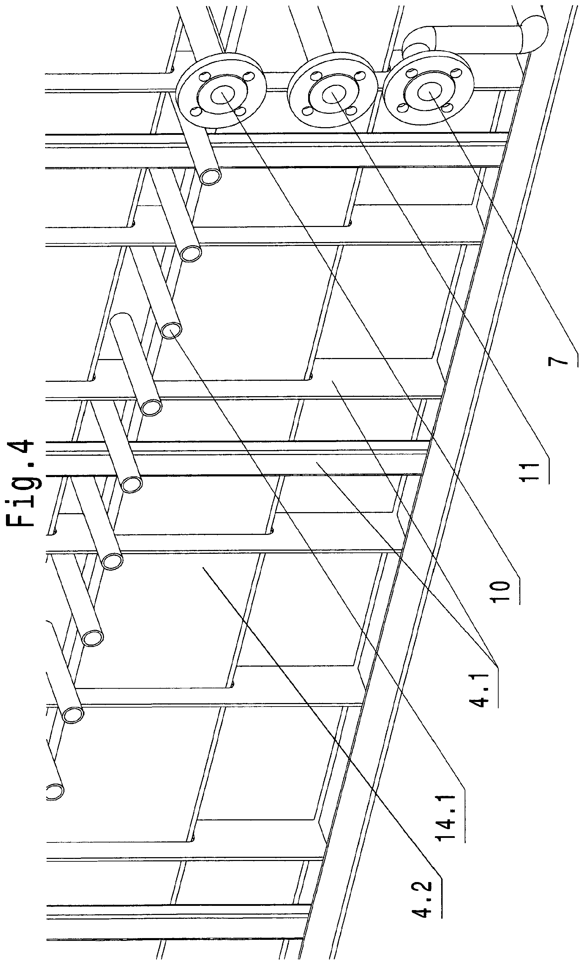

- Fig.4: Perspektivansicht einer Seitenwand des Arbeitsbehälters 1.

### Ausführungsbeispiel:

Gemäß aller oben genannten Figuren besteht das System für die Bereitstellung von flüssigen heißen Arbeitsmedien 6 zunächst aus einem geschlossenen Arbeitsbehälter 1, wobei die Arbeitsmedien-Absaug-/Förderpumpen 13 für das Arbeitsmedium 15 von Oben über die Behälterdecke zum Behälterinnenraum zugänglich angeordnet sind. Sowohl die Behälterwandung 1.2 als auch der Behälterboden 1.1 sind doppelwandig ausgebildet. Im Zwischenbereich des Behälterbodens zwischen äußerer und innerer Behälterbodenwandung 1.1 und der Behälterwandung zwischen der äußerer und innerer Behälterseitenwandung 1.2 ist ein mit einem Heizmedium betriebenes Heizsystem für das Arbeitsmedium 6 angeordnet. Weiterhin sind ein Füllstandmesssystem für das Arbeitsmedium, eine Zuführungseinrichtung sowie Absaugpumpen für das Arbeitsmedium 15 und eine außerhalb des Arbeitsbehälters 1 angeordnete Heizung für das Arbeitsmedium 15 angeordnet. Der Arbeitsbehälter 1 verfügt ebenso über Temperaturüberwachungs- und Steuersysteme für die Zuführung und Entnahme Mittels Abgang Arbeitsmedienpumpe 14.1 am Arbeitsbehälter 1, Zuleitung 14.2 für das Zuführen des optimal temperierte Arbeitsmedium 15 in den Arbeitsbehälter 1.

Weiterhin verfügt der Arbeitsbehälter über Temperaturüberwachungs- und Steuersysteme für das Heizmedium 6 und die Heizmedienkreisläufe 6.1, 6.2 und 6.3 sowie den Vor- und Rücklauf 10, 11 des Heizmediums 6 im Boden- und Seitenwandbereich 1.1 und 1.2.

Zur Ausbildung einer flächendeckend gleichmäßig und effektiv arbeitenden Bodenheizung ohne die Wärmeübertragung störende Wärmebrücken ist an der gesamten Bodenfläche des Arbeitsbehälters außerhalb zusätzlich eine geschlossene Heizmedienwanne 2 angeordnet. Im Inneren der Heizmedienwanne 2 sind nebeneinander C-Profil-Führungsbleche als Führungs- und Versteifungsbleche 5 so fest angeordnet, dass diese jeweils nur mit der Blechkontur der seitlichen C-Profilkante an der Außenfläche des Arbeitsbehälterbodens 1.1 sowie im Abstand zueinander für die dazwischen angeordneten Versteifungs- und Abstandsprofile 4 angeordnet sind. Führungs- und Versteifungsbleche 5 verfügen jeweils über wenigstens einen Heizmedienvorlauf 7 für das zugeführte und zuvor in einer außerhalb des Arbeitsbehälters 1 angeordneten zentralen Heizung aufgeheizte Heizmedium 6 und jeweils wenigstens einen Rücklauf 8 für das Zurückführen des erneut aufzuheizenden und durch die Wärmeübertragung abgekühlten Heizmediums 6 zur außerhalb des Arbeitsbehälters 1 angeordneten zentralen Heizung. Dadurch entsteht in jedem Führungs- und Versteifungsblech 5 ein Heizmedienfluss und somit ein Heizmedienkreislauf 6.1 für die Führung des Heizmediums innerhalb des Behälterbodens. An der unteren Außenwand des Behälterbodenbereich ist zusätzlich eine Dämmschicht 9 zur Minimierung von Wärmeverlusten angeordnet.

Zur Ausbildung einer Wandheizung an den äußeren Seitenwandbereichen des Arbeitsbehälters ist ebenfalls eine umlaufend ausgebildete und den Arbeitsbehälter 1 umschließende geschlossene Heizmedienwanne 3 im gesamten Seitenwandbereich angeordnet. In dieser Heizmedienwanne 3 sind an der Außenseite der Arbeitsbehälterwandung umlaufend und dort im geringen Abstand zueinander C-förmige Führungs-/Versteifungsbleche 5 so angeordnet, dass sie Heizmedienführungskanäle bilden. Dazu sind die C-förmigen Führungs-/Versteifungsbleche mit ihren stumpfen Enden der beiden seitlichen Schenkel des jeweiligen C-Profilbleches an der äußeren Wand des Arbeitsbehälters 1 fest verschweißt angeordnet, so dass sich ein umlaufender Kanal um die Seitenwand des Arbeitsbehälters bildet. Diese Anordnung erfolgt im geringen Abstand zueinander mehrfach, so dass mehrere Kanäle mehrere separate Heizmedienkreisläufe 6.2, 6.3 bilden. Jeder Heizmedienkreislauf 6.2, 6.3 im Seitenwandbereich verfügte über einen eigenen Zu- und einen Ablauf 10, 11 für das Heizmedium 6, welcher jeweils mit der außerhalb des Behälters angeordneten Heizung in direkter Verbindung steht. Durch die feste Anordnung der C-Profilbleche an der äußeren Seitenwand 1.2 des Arbeitsbehälters 1 erfolgt gleichzeitig eine Versteifung der Außenwand. Zusätzlich sind in der Heizmedienwanne 3 zwischen den Arbeitsbehälter-Seitenwänden 1.2 und Innenwand der Heizmedienwanne 3 der Stabilität des Arbeitsbehälters dienende Versteifungsbleche/-profile 4 so angeordnet, dass sie den Medienverlauf der Heizmedienkreisläufe 6.2 und 6.3 nicht beeinflussen oder unterbrechen. Mit der Bildung der Heizmedienkreisläufe 6.2/6.3 wird sichergestellt, dass das Arbeitsmedium 15 im Arbeitsbehälter 1 mit einem optimalen Temperaturaustausch versorgt wird, um in allen Ebenen des Arbeitsmediums 15 innerhalb des Arbeitsbehälters 1 eine annähernd gleichbleibende Temperatur zu gewährleisten.

Die für das im Inneren des Arbeitsbehälters 1 befindliche Arbeitsmedium 15 notwendigen Arbeitsmedium-Absaug-/Förderpumpen 13 sind an der oberen Behälterabdeckung mittels eines Stegsystems angeordnet und befestigt und mit einem Pumpleitungssystem 14 für das Arbeitsmedium 15 verbunden. Diese sind so angeordnet, dass sie jeweils in das heiße Arbeitsmedium-Reservoir bis kurz vor dem Behälterboden 1.1 eintaucht, wobei jede Arbeitsmedien-Absaug-/Förderpumpe 13 separat ansteuerbar ist, um den Weitertransport des heißen Arbeitsmediums 15 bedarfsgerecht von der Absaug-/Förderpumpe 13 über die Pumpleitungssysteme 14 mittels flexibler Schläuche 14.5 bis zu den Abgängen 14.1 für das Arbeitsmedium 15 an der Behälterwand 1.2 des Arbeitsbehälters 1 zu realisieren. Da das Pumpleitungssystem 14 für das Arbeitsmedium 15 aus flexiblen Schläuchen 14.5 ausgebildet ist, welche auch zum Teil mit einer Überlänge ausgestattet sind, hat den Vorteil, dass für Reparatur- und Wartungszwecke ein Übermaß an Schlauchlänge vorhanden ist und dadurch die Pumpen aus dem Arbeitsbehälter einzeln entfernt und gewartet oder ausgetauscht oder repariert werden können. Der Arbeitsbehälter 1 verfügt weiterhin über wenigstens eine Zuleitung für das Arbeitsmedium vom Arbeitsmedienlagertank 16 zum Arbeitsbehälter 1.

Vorteilhafterweise weist der Arbeitsbehälterboden 1.1 wenigstens in eine Richtung eine von der Horizontalen abweichende Neigung auf. Die Neigung, welche zur kompletten Entleerung des Arbeitsbehälters 1 benötigt wird sollte mindestens eine 0,5°-Neigung zur Horizontalen aufweisen, wobei der Behälterbodenablauf als Rücklauf 14.3 für die Tankentleerung oder für den Austausch des Arbeitsmedium 15 mit dem Arbeitsmedienlagertank 16 über den Rücklauf 14.7 mit der Verbindungsleitung 14.6 in Verbindung steht. Der Rücklauf 14.3 ist an dem Randbereich mit der kleinsten Abweichung zur Horizontalen angeordnet. Dadurch kann unkompliziert und zeitsparend ein Austausch des Arbeitsmediums 15 erfolgen, ohne Pumptechnik zum Einsatz bringen zu müssen.

An dem Arbeitsbehälter 1 ist vorteilhafter Weise ein Rücklauf 14.4 für eventuell überschüssiges Arbeitsmedium angeordnet. Dieser Rücklauf steht auch direkt mit dem Arbeitsmedium-Lagertank 16 direkt in Verbindung, wodurch das überschüssige Arbeitsmedium dem Arbeitsmedium-Lagertank 16 zurückgeführt werden kann.

Um die Wärmeverluste am Arbeitsbehälter zu minimieren ist auch an der äußeren Behälterwandung 1.2 der umlaufend angeordneten und den Arbeitsbehälter umschließende Heizmedienwanne 3 eine umlaufend Dämmschicht 12 angeordnet.

Eine weiterer vorteilhafte Lösung besteht in der Anordnung von Versteifungsblechen/-profilen 4 zwischen den C-Profil- Führungs-/Versteifungsblechen 5, welche aus statischen Gründen zwischen der Arbeitsbehälteraußenwand und der Innenwandfläche der Heizmedienwanne 3 und zwischen den C-Profil- Führungs-/Versteifungsblechen 5 zwischen der Arbeitsbehälteraußenwand im Bodenbereich und der Innenwandfläche der Heizmedienwanne 2 als Abstandsbleche fest angeordnet sind. Dadurch wird eine Druckaufnahme und -verteilung, welche durch das Arbeitsmedium auf die äußere Behälterwandung ausgeübt wird realisiert. Dies Versteifungsbleche 4 sind so angeordnet, dass die Heizmedien-Führungskanäle durch die Bleche hindurchgeführt sind und somit der Medienfluss des Heizmediums 6 nicht gestört ist.

Mit diesem Arbeitsbehälter wurde eine Lösung geschaffen, welche es ermöglicht, dass ein bedarfsgerecht temperiertes Arbeitsmedium, beispielsweise Heizwachs für die Imprägnierung von Karosserie- oder Maschinenteilen mit einer konstanten Temperatur zur Verfügung gestellt werden kann, ohne den Arbeitsprozess zu beeinflussen, auch nicht bei Wartungsarbeiten. Außerdem kann mit dieser Lösung die Gefahr eines Kontaktes zwischen Heizmedium und Arbeitsmedium im Falle einer Havarie ausgeschlossen werden und somit eine Verunreinigung des Arbeitsmediums durch eine eventuell auftretende Leckage in der Leitung des Heizmediums oder eine Explosionsgefahr durch einen solchen Kontakt sicher vermieden werden.

### Bezugszeichenliste

1 Arbeitsbehälter
1.1 Arbeitsbehälterboden
1.2Arbeitsbehälterseitenwand
2 Heizmedienwanne Boden Arbeitsbehälter
3 Heizmedienwanne Seitenwand Arbeitsbehälter
4 Versteifungsbleche-/profile
5 Führungs-/Versteifungsbleche
6 Heizmedien
6.1 Heizmedienkreislauf Boden
6.2Oberer Heizmedienkreislauf Seitenwand
6.3Unterer Heizmedienkreislauf Seitenwand
7 Heizmedienvorlauf Boden
8 Heizmedienrücklauf Boden
9 Dämmschicht Boden
10 Heizmedienvorlauf Seitenwand
11 Heizmedienrücklauf Seitenwand
12 Dämmschicht Seitenwand
13 Arbeitsmedien-Absaug-/Förderpumpe
14 Pumpleitungssystem für den Arbeitsmedium
14.1 Abgang Arbeitsmedienpumpe am Arbeitsbehälter
14.2 Zuleitung/Befüllleitung Arbeitsmedium
14.3 Rücklauf für Tankentleerung Arbeitsmedium
14.4 Rücklauf überschüssiges Arbeitsmedium
14.5 Flexibler Schlauch für Arbeitsmedium
14.6 Verbindungsleitung Arbeitsbehälter Wachslagertank
14.7 Rücklauf vom Arbeitsbehälter zum Wachslagertank
15 Arbeitsmedium
16 Arbeitsmedium-Lagertank

## Patentansprüche

1. System für die Bereitstellung von flüssigen heißen Arbeitsmedien, bestehend aus einem geschlossenen Behälter, wobei die Entnahmepumpen für das Arbeitsmedium von Oben über die Behälterdecke zum Behälterinnenraum zugänglich angeordnet sind und sowohl die Behälterwandung als auch der Behälterboden doppelwandig ausgebildet sind und in den Zwischenbereichen des Behälterbodens als auch der Behälterwandung ein mit einem Heizmedium betriebenes Heizsystem angeordnet ist, einem Füllstandmesssystem für das Arbeitsmedium, einer Zuführungseinrichtung sowie Absaugpumpen für das Arbeitsmedium, einer außerhalb des Behälters angeordneten Heizung für das Heizmedium, sowie über Temperaturüberwachungs- und Steuersysteme für die Zuführung und Entnahme von Arbeitsmedium und Heizmedium,
**dadurch gekennzeichnet,**
**dass** zur Ausbildung einer flächendeckend gleichmäßig und effektiv ohne Wärmebrücken arbeitenden Bodenheizung an der gesamten Bodenfläche des Arbeitsbehälters außerhalb eine Heizmedienwanne (2) als geschlossene Wanne angeordnet ist, wobei im Inneren der Heizmedienwanne (2) C-Profil-Führungsbleche als Führungs- und Versteifungsbleche (5) so fest angeordnet sind, dass diese jeweils nur mit einer seitlichen C-Profilfläche an der Außenfläche des Behälterbodens (1.1) und an der Innenfläche der Heizmedienwanne (2) sowie im Abstand zueinander angeordnet sind, welche über wenigstens einen Vorlauf (7) für das zugeführte und zuvor in der außerhalb des Arbeitsbehälters angeordneten zentralen Heizung aufgeheizte Heizmedium (6) und jeweils wenigstens einen Rücklauf (8) für das Zurückführen des erkalteten Heizmediums zur außerhalb des Arbeitsbehälters angeordneten zentralen Heizung verfügt, so dass sich in jedem durch die Führungs- und Versteifungsbleche (5) so ausgebildeten Führungskanal ein Kreislauf (6.1) für die Führung des Heizmediums innerhalb des Behälterbodens ausbildet und am äußeren Behälterbodenbereich eine Dämmschicht (9) zur Minimierung von Wärmeverlusten angeordnet ist, **dass** zur Ausbildung einer Wandheizung an den äußeren Seitenwandbereichen des Arbeitsbehälters (1) ebenfalls eine umlaufend ausgebildete und den Arbeitsbehälter (1) umschließende geschlossene Heizmedienwanne (3) angeordnet ist, wobei an der äußeren Arbeitsbehälterwandung umlaufend und dort im geringen Abstand zueinander C-förmige Führungs-/Versteifungsbleche (5) so angeordnet sind, dass sie Heizmedienführungskanäle bilden, die Führungskanäle durch C-förmige Führungsbleche ausgebildet sind, welche mit deren stumpfen Enden der beiden seitlichen Schenkel des jeweiligen C-Profilbleches an der äußeren Behälterwand des Arbeitsbehälters (1) so angeordnet sind, dass durch diese C-förmigen Profilbleche zusammen mit der zwischen den stumpfen Enden befindlichen äußeren Wand des Arbeitsbehälters (1) jeweils ein um die seitliche äußere Arbeitsbehälterwandung umlaufender, das Heizmedium führender Heizmedium-Führungskanal und somit ein Heizmedienkreislauf (6.2, 6.3) gebildet wird, wobei jeder Heizmediumkreislauf (6.2, 6.3) über einen Zu- und einen Ablauf (10, 11) für das Heizmedium verfügt, welche mit der außerhalb des Behälters angeordneten Heizung in direkter Verbindung stehen,
**dass** die Arbeitsmedium-Absaugpumpen (13) für das Arbeitsmedium (15) im Inneren des Arbeitsbehälters (1) an der oberen Behälterabdeckung mittels eines Stegsystems angeordnet und befestigt sind und mit einem Pumpleitungssystem (14) für das Arbeitsmedium (15) verbunden sind, welches so angeordnet ist, dass dieses jeweils in das heiße Reservoir des Arbeitsmediums (15) bis kurz vor dem Behälterboden (1.1) eintaucht, wobei jede Arbeitsmedien-Absaug-/Förderpumpe (13) separat ansteuerbar gestaltet ist, um den Weitertransport des heißen Arbeitsmediums (15) vom Ansaugrohr der Absaug-/Förderpumpe (13) über Pumpleitungssysteme (14) bis zu den Abnahmestellen (14.1) an der Behälterwand (1.2) zu realisieren und
**dass** an der äußeren Behälterwandung (1.2) der umlaufend angeordneten und den Arbeitsbehälter umschließende Heizmedienwanne (3) eine umlaufende Dämmschicht (12) zur Minimierung von Wärmeverlusten angeordnet ist.

2. System für die Bereitstellung von flüssigen heißen Arbeitsmedien nach dem Anspruch 1, **dadurch gekennzeichnet, dass** der Arbeitsbehälterboden (1.1) zur kompletten Entleerung eine mindestens 0,5° -Neigung zur Horizontalen aufweist und über einen Behälterbodenablauf für das Arbeitsmedium (15) an dem Randbereich mit der kleinsten Abweichung zur Horizontalen aufweist.

3. System für die Bereitstellung von flüssigen heißen Arbeitsmedien nach den Ansprüchen 1 und 2, **dadurch gekennzeichnet, dass** zwischen den C-Profil- Führungs-/Versteifungsblechen (5) zwischen der Arbeitsbehälteraußenwand und der Innenwandfläche der Heizmedienwanne (3) der Statik dienende Versteifungsbleche/-profile (4) als Abstandsbleche fest angeordnet sind.

4. System für die Bereitstellung von flüssigen heißen Arbeitsmedien nach den Ansprüchen 1 bis 3, **dadurch gekennzeichnet, dass** zwischen den Führungs-/Versteifungsblechen (5) zwischen der Arbeitsbehälteraußenwand im Bodenbereich und der Innenwandfläche der Heizmedienwanne (2) der Statik dienende Versteifungsbleche/-profile (4) fest angeordnet sind.

5. System für die Bereitstellung von flüssigen heißen Arbeitsmedien nach den Ansprüchen 1 bis 4, **dadurch gekennzeichnet, dass** das Pumpleitungssystem (14) für das Arbeitsmedium (15) teilweise aus flexiblen Schläuchen ausgebildet ist, welche für Reparatur- und Wartungszwecke ein Übermaß an Schlauchlänge aufweisen.

## Claims

1. System for providing liquid hot working media, consisting of a closed container, wherein withdrawal pumps for the working medium are arranged so as to be accessible from above, via the container top, towards the container interior and both the container wall and the container base are of double-walled form and a heating system operated with a heating medium is arranged in the intermediate regions of the container base and of the container wall, a fill-level-measuring system for the working medium, a feed device and suction-extraction pumps for the working medium, a heating system, arranged outside the container, for the heating medium, and temperature-monitoring and control systems for the feeding and withdrawal of working medium and heating medium,
**characterized**
**in that,** for forming a base heating system which operates in a manner uniform in an area-covering manner and effective without heat bridges, on the entire base surface of the working container, there is arranged on the outside a heating-media trough as a closed trough, wherein, in the interior of the heating-media trough, C-profile guide plates are arranged, as guide and reinforcement plates (5), fixedly in such a way that they are arranged in each case only with a lateral C-profile surface on the outer surface of the container base (1.1) and on the inner surface of the heating-media trough and at a distance from one another, said C-profile guide plates having at least one supply (7) for the fed heating medium (6) heated previously in the central heating system which is arranged outside the working container and having in each case at least one return (8) for returning of the cooled heating medium to the central heating system arranged outside the working container such that, in each guide channel formed in this way by the guide and reinforcement plates (5), there is formed a circuit (6.1) for guiding the heating medium within the container base, and an insulating layer (9), for minimizing heat losses, is arranged on the outer container-base region,
**in that,** for forming a wall heating system, on the outer side-wall regions of the working container (1), there is likewise arranged a closed heating-media trough (3) which is configured to be peripheral and surrounds the working container (1), wherein C-shaped guide/reinforcement plates (5) are arrange peripherally and at a small distance from one another on the outer working-container wall in such a way that they form heating-media guide channels, the guide channels being formed by C-shaped guide plates which, by way of their blunt ends of the two lateral limbs of the respective C-profile plate, are arranged on the outer container wall of the working container (1) in such a way that, by way of said C-shaped profile plates together with the outer wall of the working container (1) situated between the blunt ends, in each case one heating-medium guide channel, which runs peripherally around the lateral outer working-container wall and guides the heating medium, and thus one heating-medium circuit (6.2, 6.3), is formed, wherein each heating-medium circuit (6.2, 6.3) has an inlet and an outlet (10, 11) for the heating medium, which are connected directly to the heating system arranged outside the container,
**in that** the working-medium suction-extraction pumps (13) for the working medium (15) in the interior of the working container (1) are arranged on and fastened to the upper container cover by means of a web system and are connected to a pump line system (14) for the working medium (15), said pump line system being arranged in such a way that this in each case projects into the hot reservoir of the working medium (15) as far as shortly before the container base (1.1), wherein each working-medium suction-extraction/conveying pump (13) is designed so as to be separately controllable, so as to realize the onward transport of the hot working medium (15) from the intake tube of the suction-extraction/conveying pump (13) via pump line systems (14) as far as the removal points (14.1) on the container wall (1.2), and
**in that** a peripheral insulating layer (12), for minimizing heat losses, is arranged on the outer container wall (1.2) of the heating-media trough (3) arranged peripherally and surrounding the working container.

2. System for providing liquid hot working media according to Claim 1, **characterized in that** the working-container base (1.1) has an inclination of at least 0.5° in relation to the horizontal for complete emptying and has a container-base outlet for the working medium (15) at the edge region with the smallest deviation from the horizontal.

3. System for providing liquid hot working media according to Claims 1 and 2, **characterized in that** reinforcement plates/profiles (4) serving for rigidity are arranged fixedly as spacer plates between the C-profile guide/reinforcement plates (5) between the working-container outer wall and the inner-wall surface of the heating-media trough (3).

4. System for providing liquid hot working media according to Claims 1 to 3, **characterized in that** reinforcement plates/profiles (4) serving for rigidity are arranged fixedly between the guide/reinforcement plates (5) between the working-container outer wall in the base region and the inner-wall surface of the heating-media trough (2).

5. System for providing liquid hot working media according to Claims 1 to 4, **characterized in that** the pump line system (14) for the working medium (15) is formed in part from flexible hoses which, for repair and maintenance purposes, are oversized in terms of hose length.

## Revendications

1. Système pour la fourniture de fluides de travail liquides chauds, constitué d'un récipient fermé, des pompes de prélèvement pour le fluide de travail étant agencées de manière à être accessibles par le haut, via le plafond de récipient, vers l'espace intérieur de récipient, et aussi bien la paroi de récipient que le fond de récipient étant réalisés à double paroi, et un système de chauffage exploité avec un fluide de chauffage étant agencé dans les zones intermédiaires du fond de récipient ainsi que de la paroi de récipient, un système de mesure de niveau de remplissage pour le fluide de travail, un dispositif d'amenée ainsi que des pompes d'évacuation pour le fluide de travail, un chauffage agencé à l'extérieur du récipient pour le fluide de chauffage, ainsi que des systèmes de surveillance et de commande de la température pour l'amenée et le prélèvement de fluide de travail et de fluide de chauffage,
**caractérisé**
**en ce que,** pour réaliser un chauffage de fond fonctionnant de manière uniforme et efficace sur toute la surface, sans ponts thermiques, sur toute la surface de fond du récipient de travail, il est agencé à l'extérieur une cuve de fluide de chauffage sous forme de cuve fermée, des tôles de guidage à profil en C étant agencées de manière fixe à l'intérieur de la cuve de fluide de chauffage sous forme de tôles de guidage et de renforcement (5) de telle sorte que celles-ci ne sont agencées respectivement que par une surface de profil en C latérale sur la surface extérieure du fond de récipient (1.1) et sur la surface intérieure de la cuve de fluide de chauffage ainsi qu'à distance les unes des autres, lesquelles sont disposent d'au moins une conduite d'aller (7) pour le fluide de chauffage (6) amené et préalablement chauffé dans le chauffage central agencé à l'extérieur du récipient de travail et respectivement d'au moins une conduite de retour (8) pour le retour du fluide de chauffage refroidi vers le chauffage central agencé à l'extérieur du récipient de travail, de telle sorte que dans chaque canal de guidage ainsi réalisé par les tôles de guidage et de renforcement (5) se réalise un circuit (6.1) pour le guidage du fluide de chauffage à l'intérieur du fond de récipient et une couche d'isolation (9) est agencée sur la zone de fond de récipient extérieure pour minimiser les pertes de chaleur,
**en ce que,** pour réaliser un chauffage de paroi, une cuve de fluide de chauffage (3) fermée, réalisée sous forme périphérique et entourant le récipient de travail (1), est également agencée sur les zones de paroi latérale extérieures du récipient de travail (1), des tôles de guidage/renforcement (5) en forme de C étant agencées sur la paroi de réservoir de travail extérieure, sous forme périphérique et à faible distance les unes des autres, de manière à former des canaux de guidage de fluide de chauffage, les canaux de guidage étant réalisés par des tôles de guidage en forme de C qui sont agencées avec leurs extrémités obtuses des deux branches latérales de la tôle profilée en C respective sur la paroi de récipient extérieure du récipient de travail (1) de telle sorte que ces tôles profilées en forme de C forment respectivement, conjointement avec la paroi extérieure du récipient de travail (1) se trouvant entre les extrémités obtuses, un canal de guidage de fluide de chauffage périphérique autour de la paroi de récipient de travail extérieure latérale, guidant le fluide de chauffage, et donc un circuit de fluide de chauffage (6.2, 6.3), chaque circuit de fluide de chauffage (6.2, 6.3) disposant d'une entrée et d'une sortie (10, 11) pour le fluide de chauffage, qui sont en liaison directe avec le chauffage agencé à l'extérieur du récipient,
**en ce que** les pompes d'évacuation de fluide de travail (13) pour le fluide de travail (15) sont agencées et fixées à l'intérieur du récipient de travail (1) sur le couvercle de récipient supérieur au moyen d'un système d'entretoise et sont reliées à un système de conduite de pompage (14) pour le fluide de travail (15) qui est agencé de telle sorte qu'il pénètre respectivement dans le réservoir chaud du fluide de travail (15) jusqu'à peu avant le fond de récipient (1.1), chaque pompe d'évacuation/de refoulement de fluide de travail (13) étant conçue de manière à pouvoir être commandée séparément, afin de réaliser le transport ultérieur du fluide de travail chaud (15) depuis le tube d'aspiration de la pompe d'évacuation/de refoulement (13) via des systèmes de conduite de pompage (14) jusqu'aux points de prélèvement (14.1) sur la paroi de récipient (1.2) et
**en ce qu'**une couche d'isolation périphérique (12) est agencée sur la paroi de récipient extérieure (1.2) de la cuve de fluide de chauffage (3) agencée sous forme périphérique et entourant le récipient de travail afin de minimiser les pertes de chaleur.

2. Système pour la fourniture de fluides de travail liquides chauds selon la revendication 1, **caractérisé en ce que** le fond de récipient de travail (1.1) présente une inclinaison d'au moins 0,5° par rapport à l'horizontale pour le vidage complet et présente un écoulement de fond de récipient pour le fluide de travail (15) au niveau de la zone de bord avec le plus petit écart par rapport à l'horizontale.

3. Système pour la fourniture de fluides de travail liquides chauds selon les revendications 1 et 2, **caractérisé en ce que** des tôles/profilés de renforcement (4) servant à la statique sont agencés de manière fixe en tant que tôles d'écartement entre les tôles de guidage/renforcement à profil en C (5) entre la paroi extérieure de récipient de travail et la surface de paroi intérieure de la cuve de fluide de chauffage (3).

4. Système pour la fourniture de fluides de travail liquides chauds selon les revendications 1 à 3, **caractérisé en ce que** des tôles/profilés de renforcement (4) servant à la statique sont agencés de manière fixe entre les tôles de guidage/renforcement (5) entre la paroi extérieure de récipient de travail dans la zone de fond et la surface de paroi intérieure de la cuve de fluide de chauffage (2).

5. Système pour la fourniture de fluides de travail liquides chauds selon les revendications 1 à 4, **caractérisé en ce que** le système de conduite de pompage (14) pour le fluide de travail (15) est réalisé en partie de tuyaux flexibles qui présentent une sur-longueur de tuyau à des fins de réparation et d'entretien.
